Europäisches Patentamt

European Patent Office

Office européen des brevets

(11) Publication number: **0 411 137 A1**

# EUROPEAN PATENT APPLICATION
## published in accordance with Art. 158(3) EPC

(21) Application number: 90901669.3

(22) Date of filing: 09.01.90

(86) International application number: PCT/JP90/00014

(87) International publication number: WO 90/08351 (26.07.90 90/17)

(51) Int. Cl.5: **G05B 19/403**

(30) Priority: 10.01.89 JP 1371/89

(43) Date of publication of application: 06.02.91 Bulletin 91/06

(84) Designated Contracting States: CH DE FR GB IT LI

(71) Applicant: FANUC LTD. 3580, Shibokusa Aza-Komanba, Oshino-mura Minamitsuru-gun, Yamanashi 401-05(JP)

(72) Inventor: SEKI, Masaki 3-15-2-406, Takaidonishi Suginami-ku Tokyo 168(JP) Inventor: SAMUKAWA, Koji Fanuc Dai-3 Vira-karamatsu 3527-1, Shibokusa Oshino-mura Minamitsuru-gun Yamanashi 401-05(JP) Inventor: HANAOKA, Osamu Room 9-304 Fanuc Manshonharimomi 3533-2, Shibokusa Oshino-mura, Minamitsuru-gun Yamanashi 401-05(JP)

(74) Representative: Billington, Lawrence Emlyn et al HASELTINE LAKE & CO Hazlitt House 28 Southampton Buildings Chancery Laneane London WC2A 1AT(GB)

(54) METHOD OF FORMING COMPOSITE CURVED SURFACE.

(57) A method of forming data of a composite curved surface maintaining high precision and quickly. After a part program is input, there are input via a keyboard reference curves (BC11,BC12,BC21,BC22) that specify first and second curved surfaces (SS1,SS2) which form a composite curved surface (SS) and data that represent operation curves (DC11,DC12,DC21,DC22). Then, a processor (102) divides by cut pitches (b1,b2) the operation curves and an intermediate sectional curve (M) that is obtained by dividing the reference curves related to the curved surfaces by cut pitches (a1,a2) designated in the part program. The processor then calculates coordinate positions (PT'(x,y,z)) at four apexes of each of many quadrilateral tiny planes (PT) constituting the curved surface that is obtained, and stores the calculated results, i.e., mesh data representing the curves in the memory. Thus, there is formed a composite curved surface consisting of two mesh data.

# FIG.2

# METHOD FOR GENERATING A COMPOUND CURVED SURFACE

Technical Field

The present invention relates to a method for generating compound curved surface, and more particularly, to a method which is capable of accurately and rapidly generating a compound curved surface comprised of a plurality of 3-dimensional curved surfaces having different shape complexity from one another.

Background Art

In design drawings, various products such as dies, comprised of one or more 3-dimensional curved surfaces, are generally represented only by a plurality of section curves. For production of the die, therefore, it is required to generate data indicative of each or the 3-dimensional curved surface on the basis of the section curves.

In a searching method of a cutting path on a 3-dimensional curved surface (disclosed in Japanese Provisional Patent Publication No. 60-48244, for instance), an intermediate section, which contains two division points each internally dividing a corresponding one of reference curves in a predetermined division ratio, is first generated on the basis of two operation curves which specify the 3-dimensional curved surface (two 2-dimensional planes, each containing a corresponding one of the operation curves, respectively intersect the 3-dimensional curved surface at the two operation curves) and the two reference curves (two 2-dimensional planes, each traversing a corresponding one of the operation curves, intersect the 3-dimensional curved surface at the reference curves). Then, the two operation curves and the two division points are converted into ones projected onto a predetermined plane, and each operation curve is divided on this plane at intervals of a predetermined distance, so as to determine a plurality of division points on each operation curve. Further determined are division points each of which divides, in the aforesaid predetermined division ratio, a corresponding one of straight lines each connecting an associated pair of the division points on the operation curves with each other. Then, an intermediate section curve connecting these division points is determined. A second intermediate section curve is determined, which corresponds to the intermediate curve and has start and end points which respectively coincide with the aforesaid two division points on the predetermined plane. The second intermediate cross sectional curve is converted into one projected on the intermediate cross section.

Further, the above process is repeated while the predetermined division ratio is varied, to thereby generate the 3-dimensional curved surface.

During the generation of the 3-dimensional curved surface, coordinate positions of four vertexes of each of a number of quadrilateral minute planes (patches), i.e., mesh data, are calculated and then stored in a curved surface storage memory, which minute planes are defined by a number of the intermediate section curves and a number of curves each connecting associated ones of the division points on these intermediate section curves with each other.

In a searching process of the cutting path, on the basis of the mesh data read out from the curved surface storage memory to a working memory, coordinate positions of intersecting points of a projected curve of the cutting path onto an XY plane and sides of the patches respectively traversing the projected curve are sequentially determined. Further, coordinate positions of points on the 3-dimensional curved surface, which points correspond to the intersecting points and indicate the cutting path, are determined in sequence, and stored in a RAM. Then, cutting path data stored in the RAM are outputted to an external storage medium, to thereby complete preparation of NC data.

In the case of a compound 3-dimensional curved surface which is comprised of a plurality of 3-dimensional curved surfaces, mesh data indicative of each of the 3-dimensional curved surfaces constituting the compound curved surface is determined in the aforesaid manner, and then the compound curved surface is generated on the basis of these mesh data (see, Japanese Provisional Patent Publication Nos. 61-199110 and 62-63307, for instance).

More specifically, in a compound curved surface generating method which is disclosed in Japanese Provisional Patent Publication No. 61-199110, operation curve data and reference curve data, which specify respective 3-dimensional curved surfaces constituting the compound curved surface, are inputted together with a starting curved surface, a compound order of the curved surfaces, and data specifying a number of planes which are perpendicular to an XY plane transversing the compound curved surface. Whereupon, the respective 3-dimensional curved surfaces are generated as in the case of Japanese Publication No. 60-48244. Then, in the process of generating the compound curved surface, coordinate positions of intersecting points of intersecting lines of the XY plane and the aforesaid many planes and sides of project patches, obtained by projecting patches constituting the respective 3-dimensional curved surfaces onto the XY plane, are respectively determined. Whereupon, coordinate positions of points, corresponding to these intersecting points, on the 3-dimensional curved surfaces are calculated. In other words, section curves indicative of the respective 3-dimensional curved surfaces are calculated. Further determined is each of intersecting points of that section curves which cross with one another, these curves corresponding to the many planes and associated with the 3-dimensional curved surfaces. By connecting the intersecting points thus determined, section curves of a compound curved surface associated with each of the planes are determined. Then, section curves of the compound curved surface associated with all of the many planes are determined, whereby the compound curved surface is generated.

A method, disclosed in Japanese Provisional Patent Publication No. 62-63307, generates a compound curved surface as in the case with Japanese Provisional Patent Publication No. 61-199110, except that the section curves representative of 3-dimensional curved surfaces constituting the compound curved surface are determined solely for those parts of the curves which actually contribute the formation of the compound curved surface.

According to the conventional methods of the aforesaid types, mesh data for the respective curved surfaces are determined by the use of the same cut pitch for these planes even when the compound curved surface is comprised of one or more curved surfaces each having a complex shape and one or more curved surfaces each having a simple shape. As a result, if the cut pitch is set to a small value so as to improve accuracy in generating data representative of the 3-dimensional curved surface having a complex shape, an amount of the mesh data is increased, and hence, a required time for data preparation is increased. On the other hand, if the cut pitch is set to a large value in order to reduce the data preparation time, the data indicative of the curved surface having complex shape cannot be generated with a required accuracy. In this manner, according to the conventional method of generating a compound curved surface, it is difficult to simultaneously achieve an improvement of the degree of accuracy of the curved surface and reduction of time period required for the curved surface generation.

Disclosure of the Invention

The object of the present invention is to provide a method for generating a compound curved surface, which is capable of generating the compound curved surface within a shortened time period and with a high degree of accuracy.

To achieve the aforementioned object, a method of generating a compound curved surface, according to the present invention, comprises the steps of: (a) setting each of cut pitches for a plurality of curved surfaces constituting the compound curved surface to a value suited to complexity of a shape of an associated one of the plurality of curved surfaces; (b) determining a plurality of minute planes constituting each of the plurality of curved surfaces, by the use of that cut pitch which corresponds to each curved surface; (c) determining data respectively indicating the minute planes; and (d) generating the compound curved surface on the basis of the thus determined data.

As mentioned above, according to the present invention, the plurality of minute planes, constituting each of the plurality of curved surfaces which in turn constitute the compound curved surface, are determined by the use of the cut pitch value suited to the shape complexity of each curved surface, and then the compound curved surface is generated on the basis of the data indicative of the respective minute planes. Accordingly, that curved surface which is complex in shape can be specified by a large amount of data, and at the same time, that curved surface which has a simple shape can be specified by a small amount of data, so that each of the plurality of curved surfaces forming the compound curved surface can be generated with a required accuracy, without the need of an increased time period for generation of the compound curved surface. In other words, the curved surface having the complex shape and forming part of the compound curved surface can be generated with a high degree of accuracy. As a result, for example, a surface to be machined, comprised of a 3-dimensional curved surface having a complex shape, can be machined with a high degree of accuracy by controlling the drive of a machine tool in accordance with a numerical control program, which is prepared on the basis of the compound curved surface generated by the method of the present invention.

Brief Description of the Drawings

Fig. 1 is a schematic block diagram showing an automatic programming apparatus embodying a compound curved surface generating method according to an embodiment of the present invention; and

Fig. 2 is a schematic perspective view for explaining a compound curved surface generating process performed by the apparatus of Fig. 1.

Best Mode of Carrying Out the Invention

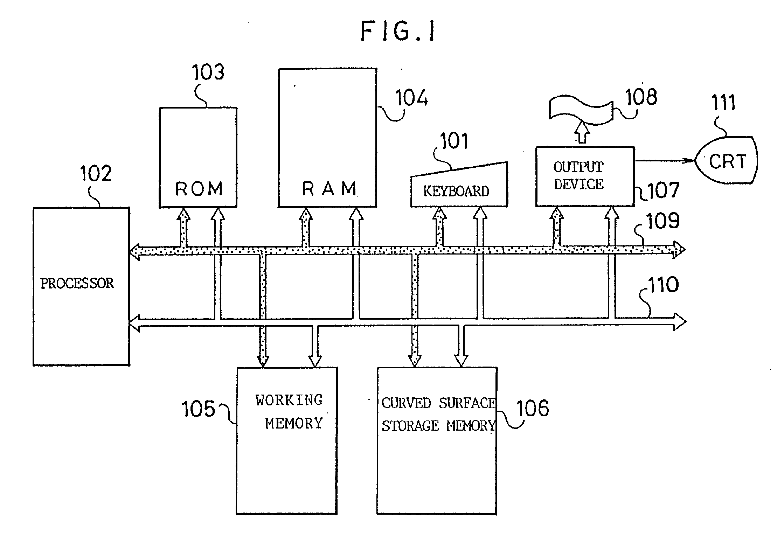

Referring to Fig. 1, an automatic programming apparatus, to which a compound curved surface generating method according to an embodiment of the present invention is applied, comprises a keyboard 101 for data entry, a processor 102, a read only memory (ROM) 103 storing therein a control program, a random access memory (RAM) 104, a working memory 105, a curved surface storage memory 106, and an output device 107. The aforementioned elements 101 and 103 - 107 are respectively connected with the processor 102 through busses which contain address busses 109 and data busses 110. Data, indicative of a curved surface which is generated by the automatic programming apparatus, is displayed by a CRT display device 111, and is stored through the output device 107 in an external storage medium 108 such as a paper tape, a magnetic tape or the like.

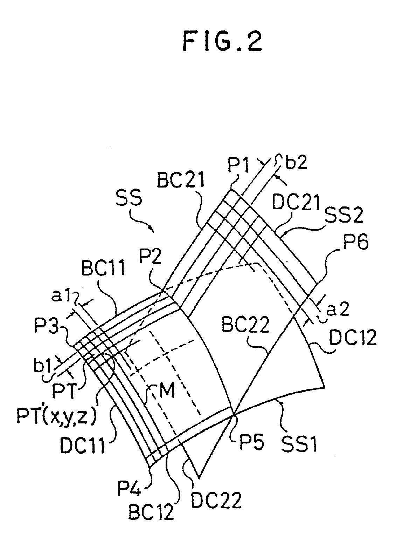

With reference to Fig. 2, an operation of the automatic programming apparatus of Fig. 1 will be explained.

Here, let it be assumed that the present embodiment is arranged to prepare an NC program for cutting a workpiece surface represented by a compound 3-dimensional curved surface SS, which is defined by connecting points P1 - P6 in Fig. 2.

At first, an operator prepares a part program corresponding to the NC program, and inputs the part program to the automatic programming apparatus. The part program includes, for instance, the following first to third statements (1) - (3) , which will be mentioned in detail later.

CUTP, a1, b1 --- (1)

COMP, SS2, A, a2, b2 --- (2)

CUT, SS1 --- (3)

Next, the operator operates the keyboard 101 so as to input data which specifies a plurality of curved surfaces constituting a compound curved surface. In the present embodiment, to specify a first 3-dimensional free curved surface SS1 which forms one half of the compound curved surface SS of Fig. 1 and which has a relatively complex shape, a name of the first curved surface SS1, and data representing a pair of reference curves BC11, BC12 and a pair of operation curves DC11, DC12 are respectively inputted. Then, in order to specify a second 3-dimensional free curved surface SS2 forming another half of the compound curved surface SS and having a relatively simple shape, a name of the second curved surface SS2, and data representing a pair of reference curves BC21, BC22 and a pair of operation curves DC21, DC22 are respectively inputted.

Next, the operator causes the automatic programming apparatus to operate in a program preparation mode. During the preparation of the NC program, the aforesaid first to third statements are read out from the part program.

The first statement "CUTP, a1, b1" represents that a cut pitch for dividing the reference curves BC11, B12 of the first curved surface SS1, serving as a primary curved surface (starting curved surface), and a cut pitch for dividing the operation curves DC11, DC12 of the same surface are set to a1 and b1, respectively. The code "COMP, SS2" contained in the second statement represents that the second curved surface SS2 should be compounded with the first curved surface SS1. The code "A" of the second statement represents that an upper side of the compound curved surface SS, i.e., the curved surface defined by connecting the points P1 - P6 is specified as a surface to be cut. The code "a2, b2" of the second statement represents that cut pitches for dividing the reference curves BC21, B22 and the operation curves DC21, DC22 of the second curved surface SS2 are set to a2 and b2, respectively. Further, the third statement "CUT, SS1" is a cut command which represents that cutting should be made on the first curved surface SS1.

When the first and second statements are read out from the part program during the program preparation, a curved surface generating process is carried out by the automatic programming apparatus, as in the curved surface generating methods disclosed in the aforesaid Japanese Provisional Patent Publication Nos. 60-48244, 61-199110 and 62-63307.

Namely, at first, the processor 102 divides the reference curves BC11 and BC12, extending along the first curved surface SS1, by the relatively small cut pitch a1 to thereby determine intermediate points on the reference curves BC11, BC12, and then determines a plurality of curves (intermediate section curves) each of which connects associated ones of the intermediate points on the reference curves BC11, BC12. These intermediate section curves (one of which is shown by symbol M ) extend along the operation curves DC11 and $\overline{DC}12$ on the first curved surface SS1. Further, the processor 102 divides the operation curves DC11 and DC12, extending along the first curved surface SS1 in the direction which is different from the direction along which the reference curves BC11 and BC12 extend, and the plurality of intermediate section curves, by the relatively small cut pitch b1, to thereby determine respective intermediate points on the reference curves BC11, BC12 and the intermediate section lines. As a result, coordinate positions (one of which is shown by symbol PT'(x, y, z)) of four vertexes of each of a number of quadrilateral minute planes, i.e., patches (one of which is shown by symbol PT) constituting the first curved surface SS1, are calculated. Preferably, this coordinate position calculation is carried out for the compound curved surface forming portion, defined by connecting the points P2 - P5, of the first curved surface SS1. Therefore, the calculation results, as a whole, constitute data (mesh data) representative of the first curved surface SS1, preferably, representative of the compound curved surface forming portion of the first curved surface. By the mesh data, the fist curved surface SS1 having the relatively complicated shape is represented by the relatively large data amount with a required accuracy. The processor 102 causes the mesh data to be stored in the curved surface storage memory 106.

Next, the processor 102 divides the reference curves BC21 and BC22 associated with the second curved surface SS2 by the relatively large cut pitch a2 to thereby determine intermediate points on the reference curves BC21, BC22, and then determines a plurality of intermediate section curves each connecting associated ones of the intermediate points on the reference curves BC21, BC22 with each other. Further, the processor 102 divides the operation curves DC21 and DC22, associated with the second curved surface SS2, and the intermediate section curves by the relatively large cut pitch b2, to thereby determine respective intermediate points on the operation curves DC21, DC22 and the intermediate section curves. As a consequence, coordinate positions of four vertexes of each of patches which constitute the second curved surface SS2 are calculated. Preferably, this coordinate position calculation is executed for the compound curved surface forming portion of the second curved surface SS2, defined by connecting the points P1, P2, P5 and P6. The data amount for representing, with a required accuracy, the second curved surface SS2 having the relatively simple shape is relatively small. Hence, the calculation is completed within a shortened time period. Then, the mesh data indicative of the second curved surface SS2, preferably, indicative of the compound curved surface forming portion of the same is stored in the memory 106. As a consequence, a group of mesh data, consisting of the aforesaid two mesh data and representing the compound curved surface SS, is generated.

During cut-machining performed by a machine tool drivingly controlled by a control apparatus which executes the NC program prepared in the aforementioned manner, the mesh data group programmed in the NC program or stored in the memory 106 is read out, and the cut-machining for the compound curved surface forming portions of the first and second curved surfaces SS1, SS2 is rapidly carried out with required degrees of accuracy.

In the foregoing embodiment, the case wherein the mesh data representative of the compound curved surface consisting of two 3-dimensional curved surfaces are generated for preparation of an NC program for cut-machining has been explained. However, the present invention is not limited to the same embodiment, but may be modified in various manners.

## Claims

1. A method for generating a compound curved surface, comprising the steps of:
   (a) setting each of cut pitches for a plurality of curved surfaces constituting the compound curved surface to a value suited to complexity of a shape of an associated one of the plurality of curved surfaces;
   (b) determining a plurality of minute planes constituting each of the plurality of curved surfaces, by the use of that cut pitch which corresponds to each curved surface;
   (c) determining data respectively indicating the minute planes; and
   (d) generating the compound curved surface on the basis of the thus determined data.

1. A method for generating a compound curved surface, wherein quadrilateral minute planes are determined as said minute planes in said step (b), and each coordinate position of at least one vertex of each of said quadrilateral minute planes is determined as said minute plane data in said step (c).

2. A method for generating a compound curved surface, wherein said step (a) is performed by stating statements respectively specifying said cut pitches in a part program which is inputted to an automatic programming apparatus.

# FIG.1

EP 0 411 137 A1

# FIG.2

# INTERNATIONAL SEARCH REPORT

International Application No PCT/JP90/00014

## I. CLASSIFICATION OF SUBJECT MATTER (if several classification symbols apply, indicate all) 6

According to International Patent Classification (IPC) or to both National Classification and IPC

Int. Cl$^5$     G05B19/403

## II. FIELDS SEARCHED

| Minimum Documentation Searched 7 | |
|---|---|
| Classification System | Classification Symbols |
| IPC | G05B19/403 |

Documentation Searched other than Minimum Documentation
to the Extent that such Documents are Included in the Fields Searched 8

| Jitsuyo Shinan Koho | 1971 - 1989 |
|---|---|
| Kokai Jitsuyo Shinan Koho | 1971 - 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 61-199110 (Fanuc Ltd.), 3 September 1986 (03. 09. 86), & WO, A, 8605289 & EP, A, 215955 | 1 - 3 |
| Y | JP, A, 63-62641 (Sony Corporation), 18 March 1988 (18. 03. 88), Page 3, upper right column, lines 12 to 16 (Family: none) | 1 - 3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| April 2, 1990 (02. 04. 90) | April 16, 1990 (16. 04. 90) |
| International Searching Authority | Signature of Authorized Officer |
| Japanese Patent Office | |

Form PCT/ISA/210 (second sheet) (January 1985)